# EUROPEAN PATENT APPLICATION

(11) **EP 1 760 574 A2**
(43) Date of publication of application: **07.03.2007**
(21) Application number: 06017905.8
(22) Date of filing: 28.08.2006
(51) Int. Cl.: G06F 3/048, G06F 1/16

(54) **Mobile communication terminal having content data scrolling capability and method for scrolling through content data**

(30) Priority: 02.09.2005 KR 20050081837
(71) Applicant: LG Electronics Inc., Yongdungpo-gu Seoul (KR)
(72) Inventor: Tak, Yong Sang, Yangcheon-gu, Seoul (KR)
(74) Representative: Urner, Peter

(57) **Abstract**

A mobile communication terminal capable of scrolling through content data includes at least one acceleration key configured to generate an acceleration signal when the acceleration key is activated. A controller is configured to scroll through the content data at a higher speed than a predefined speed based on the acceleration signal.

## Description

This application claims the benefit of Korean Patent Application No. 10-2005-0081837, filed on September 02, 2005, which is hereby incorporated by reference as if fully set forth herein.

### BACKGROUND

### Field of the Disclosure

The present disclosure relates to a mobile communication terminal, and more particularly to a mobile communication terminal capable of scrolling through stored content data and a method for scrolling through content data in a mobile communication terminal.

### Discussion of the Related Art

A method of scrolling through content data using a conventional mobile communication terminal is now described in detail. The above mentioned conventional mobile communication terminal includes a display, a keypad, a speaker, and a microphone.

A user of the mobile communication terminal can search through a variety of content data stored in the mobile communication terminal using predetermined keys associated with the keypad. For instance, the user can search using at least one of four arrow keys: a right arrow key, a left arrow key, an up arrow key, and a down arrow key. If the user touches or presses one of the aforementioned keys once, the mobile communication terminal scrolls through the stored content data by one shift. For example, if the user wants to perform two scrolling operations in a downward direction and three scrolling operations in a right direction, the user must touch or press the down arrow key twice, and then the right arrow key three times.

The display displays the scrolling process through the content data based on direction signals that are generated each time the user touches or presses one of the four arrow keys. For example, the display displays a single scrolling operation in the right direction when the user touches or presses the right arrow key once. In another example, the display displays two scrolling operations; a first scrolling operation that shifts twice in a downward direction and a second scrolling operation that shifts once in a left direction when the user touches or presses the down arrow key two times and the left arrow key once.

A disadvantage of the above-mentioned conventional mobile communication terminal is that the user must separately touch or press the arrow keys for each shift through the stored content data. If the search for desired content data requires scrolling through a large volume of content data, the user will be required to repeatedly touch or press the arrow keys many times.

Another disadvantage of the above-mentioned conventional mobile communication terminal is that time is unnecessarily wasted while the user repeatedly presses the arrow keys in order to search for the desired content data.

### SUMMARY

Accordingly, a mobile communication terminal having scrolling capability and a method for scrolling through content data stored in a mobile communication terminal that substantially obviates the above-identified and other problems are desirable.

According to one advantage of the invention, a mobile communication terminal is capable of scrolling through a variety of stored content data using a touch-pad or sensor located at the mobile communication terminal and a method for using same.

According to one advantage of the invention, a mobile communication terminal is capable of rapidly scrolling through a variety of content data and a method for using same.

According to yet another advantage of the invention, a mobile communication terminal is capable of displaying a process of scrolling through stored content data in a desired search direction and a method for providing such capability.

In one embodiment, the mobile communication terminal may include at least one acceleration key configured to generate an acceleration signal when the acceleration key is activated, and a controller configured to scroll through the content data at a higher speed than a predefined speed in response to the acceleration signal.

In another embodiment, a method for scrolling through content data using a mobile communication terminal may include generating a scroll signal, determining whether an acceleration signal to scroll through the content data at a higher speed than a predefined speed is received, and scrolling through the content data at the higher speed if the acceleration signal is received.

It is to be understood that both the foregoing general description and the detailed description to follow are exemplary and explanatory and should not be construed as limiting the scope of the claims.

### BRIEF DESCRIPTION OF THE DRAWINGS

The accompanying drawings provide a further understanding of the disclosure, and illustrated embodiment(s), which together with the detailed description serve to explain the principles of the various embodiments of the invention.

FIG. 1 is a block diagram illustrating an exemplary mobile communication terminal capable of scrolling through content data in accordance with an embodiment of the invention;

FIG. 2a is a front view of an input unit according to a first exemplary embodiment of the invention;

FIG. 2b is a front view of an input unit according to a second exemplary embodiment of the invention;

FIG. 2c is a front view of an input unit according to a third exemplary embodiment of the invention;

FIG. 2d is a front view of an input unit according to a fourth exemplary embodiment of the invention;

FIG. 2e is a front view of an input unit according to a fifth exemplary embodiment of the invention;

FIG. 3 is a flow chart illustrating an exemplary method for scrolling through content data using a mobile communication terminal; and

FIG. 4 is a flow chart illustrating another exemplary method for scrolling through content data using a mobile communication terminal.

### DETAILED DESCRIPTION

Reference will now be made in detail to exemplary embodiments, examples of which are illustrated in the accompanying drawings. Wherever possible, the same reference numbers will be used throughout the drawings to refer to the same or like parts.

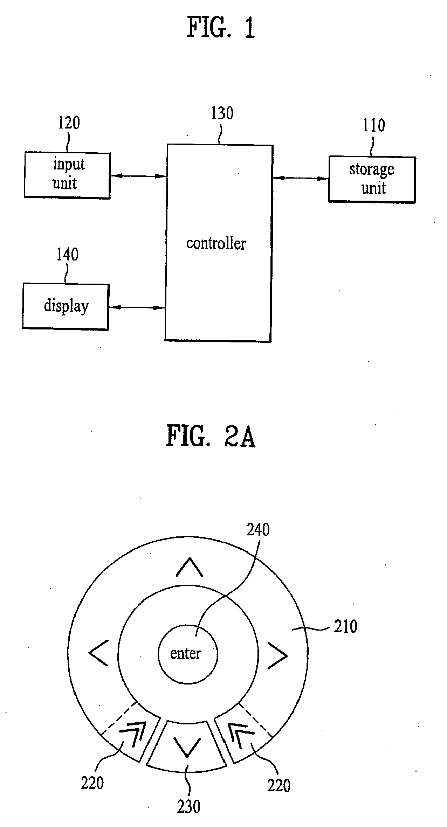

FIG. 1 is a block diagram illustrating an exemplary mobile communication terminal capable of scrolling through content data in accordance with an embodiment of the invention. The mobile communication terminal may include a storage unit or memory 110, an input unit 120, a controller 130, and a display 140. The storage unit 110 may store a variety of content data. The controller 130 may classify various content data according to predetermined categories and subcategories. For example, the controller 130 may organize the content data into a hierarchy of categories, including broad categories (e.g., image files) down to narrow categories (e.g., JPEG images). For all purposes, content data is intended to cover all forms of data, including all types of media files. The media files may include, but are not limited to, multimedia files, music files, moving image files, still image files, and multimedia messages.

For example, if the storage unit 110 stores sound setup data as a category, the storage unit 110 may store, as subcategories of the sound setup data, ringtone setup data, ringtone data or vibration setup data, volume control data, and sound effect control data. The storage unit 110 may further store a variety of data as subcategories of a subcategory. For example, the storage unit 110 may store, as subcategories of the aforementioned volume control data, incoming ringtone volume setup data, call sound volume setup data, and button sound volume setup data.

The input unit 120 may include at least one of a search key, an enter key, and a search direction key. The search key may generate a scroll signal that is used to navigate to specific content data by scrolling through the variety of content data stored in the storage unit 110. The search key may include a touch-pad or a sensor to generate the scroll signal in response to the user's input, such as a touching or pressing action in relation to the search key. Conversely, the search key may stop generating the scroll signal when the user's input, such as a touching or pressing action, is not sensed.

The scroll signal may be a signal providing location information of specific content data stored in the storage unit 110, a signal providing a scroll direction to search for the specific content data, or a signal that can execute a scroll to search for specific content data.

In one embodiment, the input unit 120 may include a touch-pad that generates a scroll signal when a user's touching or pressing action is sensed. The input unit 120 may sense pressure or temperature from either a user's finger or object that comes in contact with the touch-pad. If the sensed pressure or temperature is equal to or higher than a reference pressure or temperature, the input unit 120 generates the scroll signal. The input unit 120 may include a sensor that senses a user's touching or pressing action. The sensor may be a pressure sensor that senses pressure of the user's finger or object, or a temperature sensor that senses temperature of the user's finger or object. The input unit 120 senses the user's touching or pressing action by using the pressure or temperature sensor, and generates the scroll signal based on the sensed pressure or temperature.

In an alternative embodiment, the input unit 120 may sense a variation in current, resistance, or capacitance caused by the user's finger or object that comes in contact with the touch-pad. The input unit 120 generates the scroll signal when the variation in current, resistance, or capacitance is equal to or higher than a reference value.

The controller 130 may scroll through the variety of stored content data based on the scroll signal generated by the input unit 120. The display 140 may display either a process of scrolling through the variety of content data in order to search for specific content data, or the searched specific content data based on a control signal from the controller 130. For example, the display 140 may sequentially display the process of scrolling through the content data for specific content data based on a scroll direction selected from among the four directions (i.e., right, left, upward, or downward direction). In other words, if the selected scroll direction is a downward direction, then the display 140 may display the scroll process that scrolls through the content data in the downward direction. If the selected scroll direction is a right direction, the display 140 may display the scroll process that scrolls through the content data in the right direction.

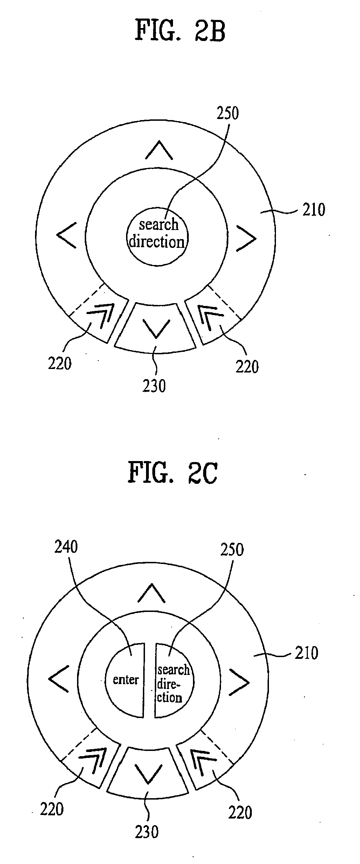

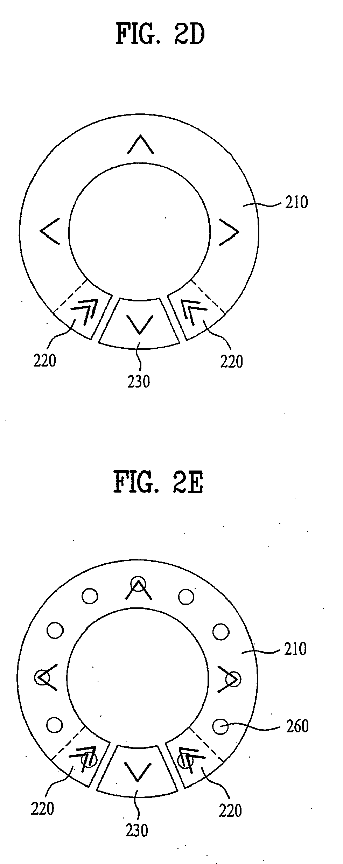

Referring now to Figs. 2a, 2b, 2c, 2d, and 2e, various embodiments of the input unit 120 will now be described. The input unit 120 may include search keys 210 and 230, and acceleration keys 220. The search key 210 may be circular and have two ends. Each acceleration key 220 may be located at one end of the circular search key 210.

The search keys 210 and 230 may include a touch-pad or a sensor to generate a scroll signal that may be used to search for desired content data when the user's touching or pressing action is sensed. According to one embodiment, if the user does not take his or her finger off one of the search keys 210 and 230, by continuous contact, the user may continuously scroll through the content data.

The acceleration keys 220 may generate an acceleration signal that may be used to scroll through content data at a higher speed than a normal speed predefined in the mobile communication terminal. The acceleration keys 220 may also be configured in the form of a protruded or recessed member to provide the acceleration keys 220 with a tactile feeling to the user. Further details of the search keys 210 and 230, and the acceleration keys 220 will be described later.

FIG. 2a is a front view of an input unit according to a first exemplary embodiment of the invention. The input unit 120 may include the search keys 210 and 230, the acceleration keys 220, and the enter key 240.

The search key 210 may include an upper arrow key (^), a left arrow key (<) and a right arrow key (>). The search key 230 may include a lower arrow key (v). The search keys 210 and 230 may be used to select a scroll direction to search for the desired content data and may be selected from at least one of four directions: a right direction; a left direction; an upward direction; and a downward direction.

For example, the downward direction is usually the default scroll direction. If the left arrow key (<) or the right arrow key (>) is touched or pressed by the user, the scroll direction may be set to the left or right direction, respectively. After the left arrow key (<) or the right arrow key (>) is selected, if the user wants to search for desired content data in an upward or downward direction, the user may touch or press the upper arrow key (^) or the lower arrow key (v) and the search direction will be set to the upward direction or the downward direction, respectively.

For example, while using the search keys 210 and 230, if the user's finger remains in continuous contact with the search key 210 while simultaneously moving his or her finger in the right direction from one part to another part of the search key 210, the content data may be scrolled in the selected scroll direction. In the meantime, if the user continuously remains in contact with the search key 210 while simultaneously moving his or her finger in the left direction from one part to another part of the search key 210, the content data may be scrolled in the opposite direction of the scrolled direction.

The acceleration keys 220 may include a double arrow key (») on either end of the search key 210. If the user desires to search for specific content data using the acceleration keys 220, the user may press or touch one of the acceleration keys 220 to scroll through content data at a higher speed than a predetermined normal speed for a predetermined period of time. If the user does not take his or her finger off and continuously remains in contact with the acceleration key 220, the accelerated scroll operation may be continuously performed. However, if the user takes his or her finger off the acceleration key 220 or touches a specific key, the accelerated scroll operation may be terminated.

According to one embodiment, if the acceleration key 220 is pressed or touched, the content data scroll operation may be performed in pages. For example, if the acceleration key 220 is touched once, a scroll operation scrolls from the current page to the next page in the selected scroll direction.

While rapidly searching for the content data using the acceleration keys 220, the mobile communication terminal may include a speaker that may output a predetermined sound. The sound may be generated at predetermined intervals so that a user of the mobile communication terminal may recognize the accelerated scroll operation status by listening to the sound.

The enter key 240, when touched or pressed by the user, may generate a signal capable of executing the scrolled content data. However, the enter key 240 may not be the only key capable of executing the scrolled content data. For example, the search keys 210 and 230, when touched or pressed for at least a predetermined period of time at a position of the scrolled content data, may generate a signal capable of executing the scrolled content data. If the user takes his or her finger off the search key 210 at a position of the scrolled content data, the search key 210 may generate a signal capable of executing the scrolled content data. Here, the scrolled content data refers to content data which is currently highlighted during browsing of at least a part of the entire content data.

FIG. 2b is a front view of an input unit according to a second exemplary embodiment of the invention. The input unit 120 may include the search keys 210 and 230, the acceleration keys 220, and a search direction key 250.

The operations and functions of the search keys 210 and 230, and the acceleration keys 220 in FIG. 2b may be similar to those of FIG. 2a, and are not further described.

The search direction key 250 in conjunction with the search keys 210 and 230 may generate a scroll direction signal that can be used to continually scroll through content data in one of four directions (i.e., right, left, upward and downward directions). For example, after the user presses or touches the search direction key 250, if the left arrow key (<) or the right arrow key (>) of the search key 210 is touched or pressed, a scroll direction signal may be generated that can continuously scroll through the content data in the left direction or the right direction, respectively. If the user presses or touches the upper arrow key (^) or the lower arrow key (v), a scroll direction signal may be generated that can continuously scroll through the content data in the upward direction or the downward direction, respectively. If the user presses or touches the search direction key 250, or one of the search keys 210 and 230 once more, the scroll operation terminates.

FIG. 2c is a front view of an input unit according to a third exemplary embodiment of the invention. The input unit 120 may include the search keys 210 and 230, the acceleration keys 220, the enter key 240, and the search direction key 250.

The operations and functions of the enter key 240 and the search keys 210 and 230 may be similar to the enter key 240 and the search keys 210 and 230 described with respect to FIG. 2a. Therefore, their detailed description will be omitted here. The operations and functions of the search direction key 250 and the search keys 210 and 230 may be similar to the search direction keys 250 and the search keys 210 and 230 described with respect to FIG. 2b. Therefore, their detailed description will be omitted here. The operations and functions of the acceleration keys 220 may be similar to the accelerated keys 220 described with respect to FIG. 2a. Therefore, their detailed description will be omitted here.

FIG. 2d is a front view of an input unit according to a fourth exemplary embodiment of the invention. The input unit 120 may include the search keys 210 and 230, and the acceleration keys 220.

The functions and operations of the search keys 210 and 230 may be similar to the search keys 210 and 230 described with respect to FIGS. 2a and 2b, and thus their detailed description are omitted here. The functions and operations of the acceleration keys 220 may be similar to the acceleration keys 220 described with respect to FIG. 2a. Thus, their detailed descriptions are omitted here.

FIG. 2e is a front view of an input unit according to a fifth exemplary embodiment of the invention. The input unit 120 may include a search key 210 that includes sensors 260. Each sensor 260, when touched or pressed, is capable of generating a signal that may be used to scroll a predetermined number of content data in a predetermined direction. For example, the sensors 260 may be positioned at specific locations at the search key 210, or may be uniformly positioned throughout the search key 210. Otherwise, the sensors 260 may be positioned at intervals of predetermined distance at the search key 210.

As an example, assuming that the predetermined number of content data that is scrolled is one, when the user touches or presses one sensor 260, then one piece of content data may be scrolled in a predetermined direction. If two sensors 260 are consecutively touched or pressed, then two pieces of content data may be scrolled in a predetermined direction.

Alternatively, the sensors 260 may be used to control the rate of scroll through the variety of content data. For example, if the user presses or touches one sensor 260, then the content data may be scrolled at a slow speed. If the user consecutively touches or presses two or more sensors 260, the content data may be scrolled at a higher speed. Thus, the scroll speed may be dependent on the number of sensors 260 touched or pressed.

The sensors 260 may be further configured in a form of a protruded or recessed member to provide a tactile feeling to the user.

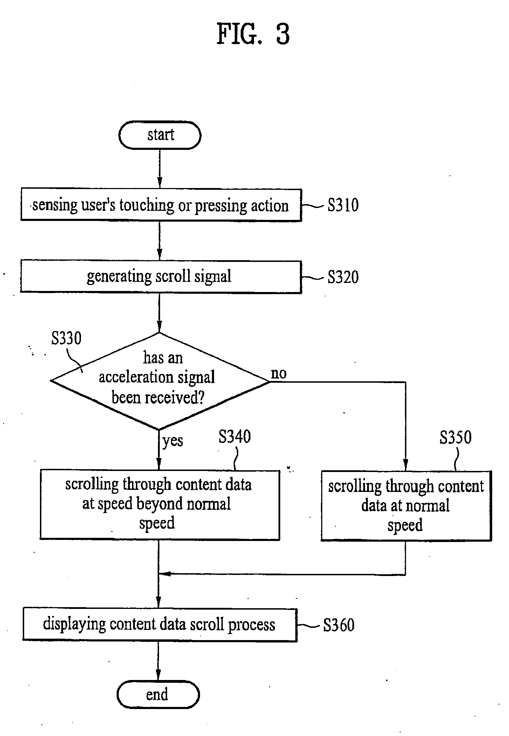

FIG. 3 is a flow chart illustrating an exemplary method of scrolling through content data in order to search for desired content in a mobile communication terminal. Referring to FIG. 3, at step S310, the user's touching or pressing action is sensed.

Based on the sensed user's touching or pressing action, a scroll signal is generated at step S320.

For example, the scroll signal may be generated using at least one of a search key, an enter key, and a search direction key contained in the mobile communication terminal. Examples of operations and functions of the search key, the enter key, and the search direction key have been previously described above. The method continues to step S330.

At step S330, a determination is made whether an acceleration signal for scrolling through the content data at a higher speed than a normal speed predefined in the mobile communication terminal has been received.

For example, the acceleration signal may be generated via acceleration keys contained in the mobile communication terminal.

If it is determined that the acceleration signal has been received at step S330, a scroll through the content data is performed at a higher speed than a normal speed, at step S340.

Otherwise, if it is determined that no acceleration signal has been received at step S330, the scroll through the content data is performed at the normal speed at step S350. The method continues to Step S360.

At step S360, the process of scrolling through content data for specific content data is displayed, or the searched specific content data is displayed.

In various embodiments, while rapidly scrolling through content data using the acceleration keys at step S340, a speaker contained in the mobile communication terminal may output a predetermined sound. The sound may be generated at predetermined intervals. Therefore, the user of the mobile communication terminal can recognize an accelerated scroll operation by hearing the sound.

In various embodiments, the scrolled content data may be executed when the enter key is pressed or touched at step S340 or S350. Here, the scrolled content data refers to content data which is currently highlighted during browsing of the entire content data.

In various embodiments, the scrolled content data may be executed if the user takes his or her finger off of the search key at a position of the scrolled content data at step S340 or S350. Here, the scrolled content data refers to a content data which is currently highlighted during browsing of the entire content data.

In various embodiments, the scrolled content data may be executed when the search key is pressed or touched for a predetermined period of time at step S340 or S350. Here, the scrolled content data refers to content data which is currently highlighted during browsing of the entire content data.

In various embodiments, a display may display the scroll process according to a scroll direction selected from among four directions (i.e., right, left, upper and lower directions) using the search keys at step S360. Otherwise, the display 130 may display the scroll process according to a scroll direction signal generated when the user touches the search direction key at step S360. In addition, the display may sequentially display the process of scrolling through content data at step S360. For example, if the search direction is set to the downward direction, the display may display the process of scrolling in the downward direction. If the search direction is set to the right direction, the display 130 may display the process of scrolling in the right direction.

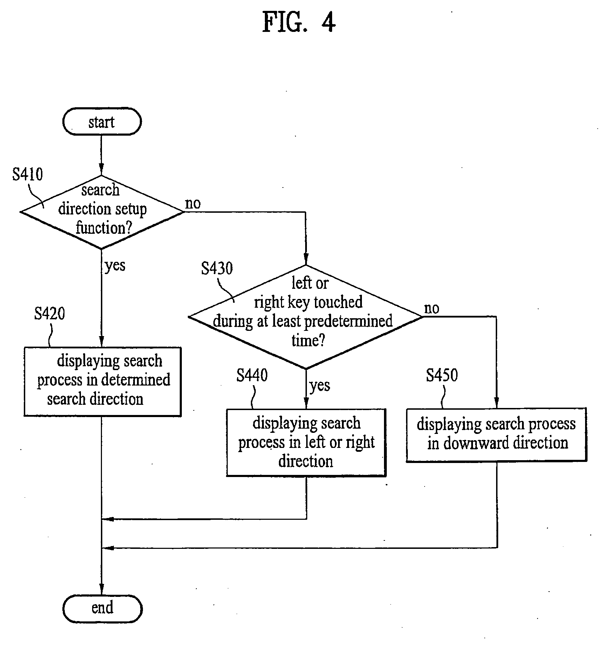

FIG. 4 is a flow chart illustrating an exemplary method for displaying a process of scrolling through content data. At step S410, the presence or absence of a search direction setup function in the mobile communication terminal is determined. For example, the search direction setup function is a specific function for allowing a user to establish a search direction through the content data using a search direction key if the mobile communication terminal includes the search direction key.

If it is determined that the mobile communication terminal includes the search direction setup function at step S410, a display displays a search process according to the search direction established by the search direction key at step S420. For example, if the search direction is set to a downward direction, the display may display the search process in the downward direction.

If it is determined that the mobile communication terminal has no search direction setup function at step S410, a determination is made whether a left arrow key (<) or a right arrow key (>) of a search key has been pressed or touched during a predetermined period of time at step S430.

If it is determined that the left arrow key (<) or the right arrow key (>) has been pressed or touched during a predetermined period of time, the display displays the search process of scrolling through content data in the left direction or the right direction, respectively, at step S440. For example, if the left arrow key (<) or the right arrow key (>) is pressed or touched during a predetermined period of time at step S430, the scroll direction is set to the left direction or the right direction, respectively. If the user continuously remains in contact with the search key while simultaneously moving his or her finger from one part to another part of the search key, which is a right direction, the user can search for the specific content data in the right direction. The display displays the search process in the right direction. In the meantime, if the user continuously remains in contact with the search key while simultaneously moving his or her finger from one part to another part of the search key, which is a left direction, the user can search for the content data in the left direction. The display displays the search process in the left direction.

If it is determined that the left arrow key (<) or the right arrow key (>) has not been pressed or touched during a predetermined period of time at step S430, the display displays the search process in the downward direction, which is default direction at step S450.

For example, if the user continuously remains in contact with the search key simultaneously with moving his or her finger from one part to another part of the search key in a clockwise direction, the user can search for the content data in the lower direction, such that the display 130 displays the aforementioned content_search_process in the lower direction at step S450. In the meantime, if the user continuously remains in contact with the search key simultaneously with moving his or her finger from one part to another part of the search key in a counterclockwise direction, the user can search for the content data in the upper direction equal to an opposite direction of the lower direction, such that the display 130 displays the aforementioned content_search_process in the upper direction at step S450.

As apparent from the above description, a mobile communication terminal senses the user's touching or pressing action using a touch-pad or a sensor contained in the input unit, such that the user can conveniently search for desired content data.

In various embodiments, the mobile communication terminal rapidly searches for desired content data using the acceleration keys contained in the input unit.

In various embodiments, the mobile communication terminal adjusts a scroll speed using the search key or the acceleration search keys contained in the input unit.

In various embodiments, the mobile communication terminal easily establishes a content search direction using the search direction key contained in the input unit.

In various embodiments, the mobile communication terminal displays a process of scrolling through the variety of content data to search for desired content data.

It will be appreciated that, in various of the above-disclosed and other features and functions, or alternatives thereof, may be implemented on a programmed microprocessor, a microcontroller, an integrated circuit element such as ASIC, PLD, PLA, FPGA, or PAL, or the like, a hardwired electronic or logic circuit, or a programmable logic device.

It will be appreciated that the described flow process can be implemented as a self-consistent sequence of computerized steps that lead to a desired result. These steps can be defined by and/or in one or more computer instructions stored in a computer-readable medium, which should be understood to encompass using a carrier wave, or the like to provide the software instructions to a processing device. These steps can be performed by a processor executing the instructions that define the steps. Further, the flow process can be performed by a processor executing one or more appropriate programs, by special purpose hardware designed to perform the method, or any combination of such hardware, firmware and software elements.

It will be appreciated that several of the above-disclosed and other features and functions, or alternatives thereof, may be desirably combined into many other different devices or applications. Also, various presently unforeseen or unanticipated alternatives, modifications, variations or improvements therein may be subsequently made by those skilled in the art, and are also intended to be encompassed by the following claims.

## Claims

1. A mobile communication terminal capable of scrolling through content data, the mobile communication terminal comprising:
at least one acceleration key configured to generate an acceleration signal when the acceleration key is activated; and
a controller configured to scroll through the content data at a higher speed than a predefined speed in response to the acceleration signal.

2. The mobile communication terminal of claim 1, wherein the controller is configured to scroll through the content data on a page by page basis when the acceleration key is activated.

3. The mobile communication terminal of claim 1, wherein the controller is configured to continuously scroll through the content data at the higher speed when the acceleration key is continuously activated.

4. The mobile communication terminal of claim 1, wherein the acceleration key is configured in a form of at least one of a protruded and recessed member.

5. The mobile communication terminal of claim 1, further comprising a search key configured to generate at least one of a scroll signal and a scroll direction signal,
wherein the controller is configured to scroll through the content data in a direction based on the scroll direction signal.

6. The mobile communication terminal of claim 5, wherein the controller is configured to scroll through the content data when the search key is activated for a predetermined period of time.

7. The mobile communication terminal of claim 5, wherein the search key has a circular shape, and the scroll direction indicated by the scroll direction signal dynamically changes when a contact point at the search key changes from one point to another point at the search key while in continuous contact with the search key.

8. The mobile communication terminal of claim 5, further comprising a search direction key configured to continuously scroll through the content data in the direction indicated by the scroll direction signal.

9. The mobile communication terminal of claim 1, further comprising a display to display content data being scrolled by the controller.

10. The mobile communication terminal of claim 1, further comprising means for generating a scroll signal.

11. The mobile communication terminal of claim 10, further comprising means for sensing an input at the scroll signal generating means.

12. The mobile communication terminal of claim 1, further comprising means for generating a signal that causes the controller to continuously scroll through the content data.

13. A mobile communication terminal capable of scrolling through content data, the mobile communication terminal comprising:
an input unit having at least two sensors, the input unit configured to generate a signal based on the number of sensors activated; and
a controller configured to scroll through a number of pieces of content data, or scroll through the content data at a higher speed than a predefined speed based on the signal.

14. A method for scrolling through content data in a mobile communication terminal, the method comprising:
generating a scroll signal;
determining whether an acceleration signal to scroll through the content data at a higher speed than a predefined speed is received; and
scrolling through the content data at the higher speed if the acceleration signal is received.

15. The method of claim 14, further comprising scrolling through the content data on a page by page basis if the acceleration signal is received.

16. The method of claim 14, further comprising:
determining whether a scroll direction signal is received; and
scrolling through the content data in a direction based on the scroll direction signal if the scroll direction signal is received.

17. The method of claim 16, further comprising:
determining whether the scroll direction signal is continuously received for a predetermined period of time; and
scrolling through the content data in the direction based on the scroll direction signal if the scroll direction signal is continuously received for the predetermined period of time.

18. The method of claim 14, further comprising causing a display to display a process of scrolling through the content data.

19. A processor executable medium containing instructions therein, which when executed by a processor causes the processor to perform the method of claim 14.

20. A method for scrolling through content data in a mobile communication terminal, the method comprising:
determining a number of signals generated, the number of signals representing a number of activated sensors; and
scrolling through a number of pieces of content data, or scrolling through the content data at a higher speed than a predefined speed based on the number of signals generated.
